# EUROPÄISCHE PATENTSCHRIFT

(11) **EP 1 801 002 B1**
(45) Veröffentlichungstag und Bekanntmachung des Hinweises auf die Patenterteilung: **30.06.2010**
(21) Anmeldenummer: 06126847.0
(22) Anmeldetag: 21.12.2006
(51) Int. Cl.: B62D 33/08, B60P 3/025

(54) **Verkaufswagen**
Vending cart
Chariot de vente

(30) Priorität: 23.12.2005 DE 202005020267 U
(43) Veröffentlichungstag der Anmeldung: 27.06.2007
(73) Patentinhaber: Alf Fahrzeugbau GmbH & Co. KG, 59368 Werne (DE)
(72) Erfinder: Leisentritt, Reinhold, 59368 Werne (DE); Schuldt, Stephan, 59368 Werne (DE)
(74) Vertreter: Dantz, Jan Henning

(56) Entgegenhaltungen:
- EP-A- 1 491 397
- WO-A-98/18667
- WO-A-2004/058128
- DE-A1- 2 850 359
- DE-A1- 3 526 420
- FR-A- 1 299 726
- FR-A- 1 304 188

## Beschreibung

Die Erfindung bezieht sich auf einen Verkaufswagen nach den Merkmalen der Oberbegriffe der Ansprüche 1 und 2.

Ein in Rede stehender Verkaufswagen kann als selbstfahrendes Fahrzeug oder bevorzugt jedoch als Verkaufsanhänger ausgelegt sein. Bevorzugt wird der Verkaufswagen zur Präsentation von Waren auf Märkten benutzt. Solche Märkte finden häufig auf den Straßen von Innenstädten statt, wobei jedem Anbieter ein genauer Platz zugeteilt ist. In der Fahrstellung des Verkaufswagens ist dieser rundum geschlossen. Nach Erreichen des angewiesenen Platzes werden die Seitenwände, die Dacheckteile und die Rückwand und bei einem Verkaufsanhänger auch die Vorderwand von einer vertikalen Stellung in eine annähernd horizontale Stellung geschwenkt. Es wird jedoch bei dem in Rede stehenden Verkaufswagen eine viereckige Gesamtdachfläche angestrebt, sodass die Dacheckteile von der seitlichen und vertikalen Stellung in die Eckbereiche der Gesamtdachfläche geschwenkt werden müssen. Dazu sind spezielle Führungsschienensysteme notwendig. Die Größe der ortsfesten Dachfläche stimmt im Wesentlichen mit der Grundfläche des Verkaufswagens in der Fahrstellung überein. Der in Rede stehende Verkaufswagen hat sich in der Praxis bestens bewährt.

Üblicherweise bietet der Betreiber eines Verkaufswagens seine Ware auf verschiedenen Märkten bzw. an wechselnden Standorten an. Es wird nun als Nachteil empfunden, dass die Größe des Verkaufswagens auf den Stand ausgelegt werden muss, dessen Länge am geringsten ist. Daraus ergibt sich, dass bei den anderen Ständen die vorhandene, angewiesene Fläche nicht voll ausgenutzt werden kann.

Aus der gattungsgemäßen DE 28 50 359 A1 ist ein Verkaufswagen für Wochenmärkte bekannt, bei dem der Verkaufstisch durch Verkaufstischverlängerungen vergrößert werden kann. Die Dachaufbauten sind ausfahrbar und von einer Plane überzogen. Die Verkaufstischverlängerungen, einschließlich der Dachaufbauten sind ineinander verschachtelt und in den Raum zwischen der Verkaufsfläche und dem Dachaufbau einfahrbar. Dazu ist es notwendig, dass die Verkaufstischverlängerungen schmaler sind als die mittlere, feste Verkaufsfläche sowie deren Dachaufbau. Die Verkaufstischverlängerungen sind so gestaltet, dass keine nennenswerten Montagearbeiten beim Ausfahren bzw. beim Einfahren notwendig sind. Wie die genaue Schienenführung dieser Verkaufstischverlängerungen gestaltet ist, geht aus der Literaturstelle nicht hervor.

Aus der FR 1 304 188 ist ein selbstfahrender Verkaufswagen bekannt, bei dem der Grundaufbau verlängerbar ist. Dazu werden auch Dachelemente zu der dem Führerhaus abgewandten Seite ausgefahren.

Auch bei dieser Ausführung ist die Ausführung des Schienensystems nicht eindeutig erkennbar.

Der Erfindung liegt die Aufgabe zugrunde, einen Verkaufswagen der eingangs näher beschriebenen Art so zu gestalten, dass die Länge der Gesamtdachfläche bzw. die Länge des Verkaufswagens in der Verkaufsstellung variabel ist, so dass diese an die jeweiligen Gegebenheiten des Verkaufsstandortes angepasst werden kann.

Die gestellte Aufgabe wird gemäß einem ersten Lösungsvorschlag durch die Merkmale des Kennzeichens des Anspruches 1 und gemäß einem zweiten Lösungsvorschlag durch die Merkmale des Kennzeichens des Anspruches 2 gelöst.

Durch das Schiebeelement bzw. durch die Schiebeelemente ist es nunmehr möglich, dass die Länge der Gesamtdachfläche bzw. die Länge des Verkaufswagens in der Verkaufsstellung den örtlichen Gegebenheiten angepasst werden kann, das heißt von Standort zu Standort kann die Länge geändert werden. Besonders vorteilhaft ist bei dem erfindungsgemäßen Verkaufswagen, dass jedes Schiebeelement gegenüber dem ortsfesten Dachelement stufenlos verschiebbar ist, so dass zwischen der kleinsten und der größten Länge jede Länge einstellbar ist. Es ist ferner vorteilhaft, dass die aus dem ortsfesten Dachelement, den Seitenwänden und den Dacheckteilen gebildete Gesamtdachfläche stützenfrei bleibt, d.h. die Seitenwände und die Dacheckteile werden ausschließlich in der ausgestellten Stellung durch Gasfedern oder gleichartige Bauteile gehalten. Dadurch lässt sich die Gesamtdachfläche in einer äußerst kurzen Zeit erstellen und für den Käufer von Waren sind keine Stützen erforderlich, die störend wirken würden. In Abkehr von den bisherigen Ausführungen kann nunmehr der Wagen für die größte Länge des angewiesenen Standortes ausgelegt werden. Wird ein Standort benutzt, dessen Länge geringer ist, wird das Schiebeelement bzw. werden die Schiebeelemente gegenüber dem ortsfesten Dachelement nicht in die äußere Endstellung verfahren, sondern sie verbleiben in einer Zwischenstellung. Daher kann der Anbieter die Lange jedes ihm zugewiesenen Standortes voll nutzen. Ferner ist besonders vorteilhaft, dass zur Bildung der Gesamtdachfläche keine Gelenke notwendig sind, die einem Verschleiß unterlegen sind. Die erfindungsgemäße Ausführung kann als verschleißfrei angesehen werden. Darüber hinaus ist vorteilhaft, dass auf Stützen für die Dacheckteile zumindest zum Teil verzichtet werden kann. Sofern Stützen notwendig sind, sind diese nur in den äußeren Eckbereichen der Gesamtdachfläche notwendig. Durch die Schiebeelemente ist die Handhabung des Verkaufswagens beim Auf- und Abbau wesentlich verbessert.

Da jedes Schiebeelement aus einem verschiebbaren Dachelement und wenigstens einer daran schwenkbar gelagerten Seitenwand und/oder einem Dacheckteil besteht, wird eine konstruktiv einfache Lösung erreicht. Demzufolge besteht jedes Schiebeelement aus dem verschiebbaren Dachelement und ein oder zwei Seitenwänden bzw. Dacheckteilen und einer Stirnwand. Vorteilhaft ist bei dieser Ausführung, dass alle Teile des Schiebeelementes gleichzeitig ein oder ausgefahren werden können. In der ausgefahrenen Stellung liegen die Dacheckteile in den Ecken der Gesamtdachfläche.

In einer bevorzugten Ausführung ist vorgesehen, dass das ortsfeste Dachelement an den Längsseiten mit jeweils einer Profilschiene versehen ist, die an den inneren, einander zugewandten Seiten mit mindestens einer Führungsrolle versehen ist. Die Führungsrolle dient der Führung der ein- und ausfahrbaren Dachelemente. In einer weiterhin noch bevorzugten Ausführungsform ist vorgesehen, dass in einem oder in beiden Endbereichen jeder Profilschiene an den einander zugewandten Seiten Bolzen eingesetzt sind, auf denen jeweils eine Führungsrolle zur Führung des Verschiebeelementes frei drehbar gelagert ist.

Es ist ferner bei dieser Ausführung noch in vorteilhafter Weise vorgesehen, dass jedes Schiebeelement teleskopierbar ist und wenigstens zwei gegenüber dem ortsfesten Dachelement verschiebbare Dachelemente aufweist. Sofern es sich um einen Verkaufsanhänger handelt, ist in der Standardausführung vorgesehen, dass dem ortsfesten Dachelement an dem vorderen und hinteren Bereich jeweils zwei in entgegengesetzten Richtungen verfahrbare Schiebeelemente zugeordnet sind. d.h. insgesamt vier Schiebeelemente. Durch die Teleskopierbarkeit jedes Schiebeelementes wird eine größtmögliche Vergrößerung der Länge des Verkaufswagens erreicht. Bei dieser Ausführung ist es dann besonders vorteilhaft, wenn ein erstes, ausschließlich gegenüber dem ortsfesten Dachelement verfahrbares Dachelement eine Quertraverse aufweist, die, in Ausfahrrichtung gesehen, hinteren Bereich angeordnet ist, und die endseitig jeweils mit mindestens einer Führungsrolle versehen ist. Diese Führungsrolle bzw. diese Führungsrollen dienen der Führung des zweiten Dachelementes, welches gegenüber dem ortsfesten Dachelement und gegenüber dem ersten Dachelement verfahrbar ist und im ausgefahrenen Zustand die Endbereiche der Gesamtdachfläche bildet. Dieses ausschließlich gegenüber dem ortsfesten Dachelement verfahrbare Dachelement ist, in der Projektion gesehen, U-förmig ausgebildet.

In den Endstellungen überlappen sich das ortsfeste Dachelement und jedes Schiebeelement nur geringfügig. Damit jedoch eine hinreichende Führung für jedes Schiebeelement gegeben ist, ist vorgesehen, dass in den Eckbereichen des ortsfesten Dachelementes an der Innenseite in Längsrichtung sich erstreckende Führungsprofile festgelegt sind, in die an jedem Stirnende Stützprofile verschiebbar geführt sind. Beim Ausfahren jedes Schiebeelementes aus der Fahrstellung heraus verbleibt jedes Stützprofil zunächst in der ursprünglichen, in die Führungsprofile eingeschobenen Lage. Ist beispielsweise das Schiebeelement um seine halbe Länge gegenüber dem ortsfesten Dachelement verfahren, wird durch einen Mitnehmer jedes Stützprofil synchron mit dem Schiebeelement verfahren. Das Stützprofil stellt demzufolge eine Verbindung zwischen dem ortsfesten Dachelement und dem Schiebeelement dar. Jedes Stützprofil ist, in der Projektion gesehen, U-förmig ausgebildet, wobei die parallelen Schenkel in den Führungsprofilen geführt sind. Der Mitnehmer schlägt dann beim Ausfahren des Schiebeelementes in einer bestimmten Stellung gegen den Mittelsteg, so dass das Stützprofil dann mitgenommen wird.

Gemäß einer anderen Ausführung ist vorgesehen, dass im mittleren Bereich des ortsfesten Dachelementes an der Innenseite ein sich in Längsrichtung erstreckendes Führungsprofil festgelegt ist, in dem ein Stützprofil verschiebbar geführt ist. Auch dieses Stützprofil stellt in der ausgefahrenen Stellung jedes Schiebeelementes die Verbindung zwischen dem ortsfesten Dachelement und dem Schiebeelement her.

Damit die Verfahrbarkeit jedes Schiebeelementes gewährleistet ist, ist vorgesehen, dass jedes verschiebbare Dachelement in einer zum ortsfesten Dachelement angrenzenden Ebene verfahrbar ist. Dabei könnten die einander zugewandt liegenden Flächen des ortsfesten Dachelementes und des Schiebeelementes aufeinander gleiten oder in einem geringen Abstand zueinander stehen. Dadurch wird ein geringstmöglicher Versatz zwischen dem ortsfesten Dachelement und dem zu verschiebenden Dachelement bzw. den verschiebenden Dachelementen erreicht. Darüber hinaus wird die Breite jedes Schiebeelementes an die Breite des ortsfesten Dachelementes angepasst.

In einer bevorzugten Ausführung ist vorgesehen, dass jedes verschiebbare Dachelement gegenüber dem ortsfesten Dachelement nach innen versetzt ist, und dass in dem Zwischenraum Führungselemente für das jeweilige zu verschiebende Dachelement angeordnet sind. Diese Ausführung bietet den Vorteil, dass die verschiebbaren Dachelemente in der eingefahrenen Stellung durch das ortsfeste Dachelement geschützt sind.

In einer bevorzugten Ausführung ist der Verkaufswagen als Verkaufsanhänger ausgebildet. Es ist dann vorgesehen, dass dem ortsfesten Dachelement zwei verschiebbare Dachelemente zugeordnet sind. Dabei entspricht die Länge jedes verschiebbaren Dachelementes der halben bzw. annähernd der halben Länge des ortsfesten Dachelementes. Bei dieser Ausführung ist es möglich, dass die maximale Länge der Gesamtdachfläche in etwa der doppelten Länge des ortsfesten Dachelementes entspricht. Bei dieser Ausführung werden die beiden Schiebeelemente beim Ein- und Ausfahren in entgegengesetzten Richtungen bewegt. Sofern es sich bei dem Verkaufswagen um ein selbstfahrendes Fahrzeug handelt, ist dem ortsfesten Dachelement nur ein verschiebbares Dachelement zugeordnet. Die Länge könnte mit der Länge des ortsfesten Dachelementes übereinstimmen. In der ausgefahrenen Endstellung würde dann jedoch das verschiebbare Dachelement relativ weit auskragen, so dass dann Stützen erforderlich sind. Darüber hinaus wäre die Führung äußerst ungenau. Es ist deshalb bei einer solchen Ausführung vorgesehen, dass die Länge des verschiebbaren Dachelementes der halben Länge des ortsfesten Dachelementes entspricht oder annähernd entspricht.

Dazu sind an der Quertraverse in den Endbereichen zwei parallel zu den Profilschienen des ortsfesten Dachelementes verlaufende Führungsschienen befestigt, die als Tragteile für das gegenüber dem ortsfesten Dachelement und dem ersten Dachelement verschiebbare zweite Dachelement ausgelegt sind.

Zur Führung des gegenüber dem ersten Dachelement und dem ortsfesten Dachelement verschiebbaren zweiten Dachelementes ist vorgesehen, dass an den Führungsschienen an einer oder an beiden Seiten Laufrollen festgelegt sind. Damit das gegenüber diesem Dachelement ebenfalls noch verschiebbare Dachelement hinreichend geführt ist, ist vorgesehen, dass die Laufrollen, bezogen auf die Ausfahrrichtung, im vorderen und mittleren Bereich paarweise angeordnet sind. Die vorderen Laufrollen liegen demzufolge an der der Quertraverse abgewandten Seite. Zweckmäßigerweise bilden die Führungsschienen eine Führung für die die Führungsschienen umgreifenden Profilstangen, die Teil eines zweiten, gegenüber dem ortsfesten und dem ersten Dachelement verfahrbaren Dachelementes sind. Damit eine ausreichende Stabilität gegeben ist, ist vorgesehen, dass die Profilstangen geschlossene Querschnitte aufweisen, demzufolge Hohlprofilstangen sind.

Die an den Führungsschienen angeordneten Laufrollen greifen zur Führung in Längsnuten der Profilstangen ein. Dabei ist vorgesehen, dass der dem ortsfesten Dachelement zugewandte äußere Schenkel jeder Profilstange innenseitig und außenseitig jeweils eine Längsnut aufweist, und dass in die innenseitige Längsnut die Laufrollen der zugehörigen Führungsschiene und dass in die außenseitige Längsnut die an dem ortsfesten Dachelement angeordneten Führungsrollen eingreifen. Damit die Funktion der Laufrollen und der Führungsrollen gegeben ist, ist vorgesehen, dass die innenseitige Längsnut gegenüber der außenseitigen Längsnut höhenversetzt ist. Dabei ist dann vorgesehen, dass die innenseitige Längsnut gegenüber der außenseitigen Längsnut gegenüber dem ortsfesten Dachelement nach unten versetzt ist. Es ist ferner noch vorgesehen, dass der gegenüberliegende, der Profilschiene des ortsfesten Dachelementes abgewandte Schenkel jeder Profilstange innenseitig wenigstens eine Längsnut aufweist, in die an der Laufschiene angeordnete Laufrollen eingreifen. Es ist ferner noch vorgesehen, dass dieser Schenkel innenseitig zwei übereinander angeordnete Laufrollen aufweist, wobei in der unteren Längsnut die Führungsrollen geführt sind. Diese Schienenanordnung ist so ausgelegt, dass die Profilschienen, die Führungsschienen und die Profilstangen beider Seiten spiegelbildlich zueinander angeordnet sind.

Gemäß einer zweiten Ausführung ist vorgesehen, dass jedes zu verschiebende Dachelement gegenüber dem ortsfesten Dachelement, bezogen auf den Querschnitt nach außen versetzt ist, und dass in den Zwischenraum Führungselemente für das zu verschiebende Dachelement vorgesehen sind.

In einer bevorzugten Ausführung ist vorgesehen, dass das ortsfeste Dachelement und jedes zu verschiebende Dachelement im Querschnitt U-förmig ausgebildet ist, wobei die Höhen der parallelen, äußeren Schenkel wesentlich geringer sind als die Breite des ortsfesten Dachelementes bzw. jedes zu verschiebenden Dachelementes. Das ortsfeste Dachelement und jedes zu verschiebende Dachelement sind nach unten offen, d.h. die Querschnitte sind umgekehrt U-förmig. Daraus ergibt sich der große Vorteil, dass das ortsfeste Dachelement und jedes zu verschiebende Dachelement fugenfrei ist, so dass keine Feuchtigkeit eindringen kann. Durch die umgekehrt U-förmige Gestaltung des ortsfesten Dachelementes und jedes zu verschiebenden Dachelementes werden ebene Flächen gebildet.

Alternativ ist es jedoch auch möglich, dass das ortsfeste Dachelement und jedes zu verschiebende Dachelement im Querschnitt bogenförmig gestaltet sind. Es ist ferner vorgesehen, dass die parallelen Schenkel jedes zu verschiebenden Dachelementes in Abstand zu den Längskanten des ortsfesten Dachelementes stehen, und dass am ortsfesten Dachelement Führungselemente für jedes Schiebeelement angeordnet sind. Diese Führungselemente sind in bevorzugter Ausführung Führungsrollen, die auf Bolzen frei drehbar gelagert sind, die fest am ortsfesten Dachelement angebracht sind. Damit jedes Schiebeelement exakt geführt ist, ist es vorgesehen, dass an den parallelen Schenkeln jedes zu verschiebenden Dachelementes an der Innenseite sowie im Abstand zum Mittelteil stehende Führungsstege angesetzt oder angeformt sind. Die Führungsrollen stehen bei dieser Ausführung zwischen dem Mittelteil und den Führungsstegen.

Damit der Verkaufswagen in der Fahrstellung allseitig verschlossen ist, ist bei einem Verkaufsanhänger die Frontseite und die Heckseite bei den bisher bekannten Ausführungen mit jeweils einer Tür versehen. Diese Ausführung hat sich bewährt, nachteilig ist jedoch, dass beim Ausschwenken der Dacheckteile diese Tür mit ausgeschwenkt werden muss. Dazu ist dann eine gewisse Kraftanstrengung notwendig. Es ist deshalb in einer Alternativausführung vorgesehen, dass der Verkaufswagen zumindest an der Heckseite eine querstehende Klappe aufweist, die um eine im oberen Bereich liegende horizontale Achse schwenkbar ist. Damit die Klappe überhaupt nicht oder nur unwesentlich gegenüber dem Schiebeelement vorsteht, ist vorgesehen, dass die Klappe aus mehreren Klappenteilen, vorzugsweise aus zwei Klappenteilen gebildet ist, und dass die Klappenteile gelenkig miteinander verbunden sind. Wenn das Heck und gegebenenfalls die Frontpartie offen sind, steht die Klappe senkrecht bzw. stehen die Klappenteile senkrecht sowie dicht beieinander. Es ist ferner vorgesehen, dass die Klappenteile größenmäßig gleich sind. Damit das Ausschwenken erleichtert wird, ist vorgesehen, dass jeder Klappe zumindest ein als Hebehilfe wirkender Linearantrieb zugeordnet ist. In bevorzugter Ausführung ist dieser Linearantrieb eine Gasfeder. Diese Gasfeder ist dann mit dem äußeren Zylinder an dem ortsfesten Dachelement oder an dem Schiebeelement angebracht, während die Kolbenstange an dem oberen Klappenteil bzw. am oberen Bereich der Klappe angelenkt ist. In der ausgefahrenen Stellung stehen dann diese Klappenteile so weit nach oben, dass eine Person in das Innere des Verkaufswagens hineingehen kann. Der Linearantrieb ist so ausgelegt, dass die Klappe selbsttätig in die Öffnungsstellung gelangt und dort gehalten wird, wenn die beiden Klappenteile manuell in eine solche Winkelstellung zueinander gebracht werden, dass der eingeschlossene Winkel ein stumpfer Winkel ist.

Der Verkaufswagen wird auch bei Dunkelheit benutzt. Es ist deshalb vorgesehen, dass innenseitig am ortsfesten Dachelement eine oder mehrere Leuchten angeordnet sind. Sofern am ortsfesten Dachelement in der Mitte ein Führungsprofil festgelegt ist, könnten diese Leuchten am Führungsprofil festgelegt oder integriert sein. Als Leuchten kommen bevorzugt Leuchtstoffröhren in Betracht. Der Auf- und Abbau eines in Rede stehenden Verkaufswagens erfolgt häufig unter Zeitdruck. Um das Handling zu erleichtern, ist in weiterer Ausgestaltung noch vorgesehen, dass jedem Schiebeelement ein Verstellantrieb zugeordnet ist. Dabei kommen die unterschiedlichsten, jedoch allgemein bekannten Antriebe in Betracht, beispielsweise elektromotorische Linearantriebe, Kolben-Zylinder-Einheiten in Form von Langhubzylindern u.dgl.

Damit die Käufer von den Witterungseinflüssen geschützt sind, ist vorgesehen, dass zumindest an einer Seite des ortsfesten Dachelements eine schwenkbare Seitenwand und zumindest an einer Seite jedes verschiebbaren Dachelementes ein schwenkbares Dacheckteil angelenkt ist, die um horizontale Achsen schwenkbar sind. Werden diese Seitenwände und die Dacheckteile in eine Horizontallage oder in eine leicht gegen die Horizontale geneigte Stellung gebracht, entsteht eine viereckige Gesamtdachfläche.

Es sei noch erwähnt, dass die an dem ortsfesten Dachelement und jedem verschiebbaren Dachelement angelenkten Seitenwände und Dacheckteile an der gleichen Seite angeordnet sind. Im Bedarfsfall können jedoch an beiden Längsseiten des ortsfesten Dachelementes und jedes verschiebbaren Dachelementes schwenkbare Seitenwände und Dacheckteile angelenkt sein.

Damit die Käufer gegen Witterungseinflüsse, insbesondere bei regnerischem Wetter optimal geschützt sind, ist vorgesehen, dass an den freien Rändern jeder Seitenwand und jedes Dacheckteiles Profilschienen festgelegt sind, in die Röllchen eingeschoben werden, die Planen tragen. Diese Planen können aus einem durchsichtigen Material bestehen. Damit je nach Gestaltung des Verkaufswagens das Verkaufspersonal ebenfalls vor den Witterungseinflüssen optimal geschützt wird, ist vorgesehen, dass bei einem Verkaufsanhänger zusätzlich an den äußeren Stirnendbereichen ebenfalls Profilschienen festgelegt sind. Sofern es sich um ein selbstfahrendes Fahrzeug handelt, sind diese Profilschienen an den Seitenwänden, den Dacheckteilen und der Rückwand angeordnet, so dass rundum Planen angehängt werden können.

Wird der Verkaufswagen in der Fahrstellung abgestellt, muss dafür Sorge getragen werden, dass der Innenraum von unbefugten Personen nicht betreten werden kann. Es ist deshalb vorgesehen, dass bei einem Verkaufsanhänger die vordere und hintere Stirnfläche durch jeweils eine schwenkbare Tür oder eine Klappe verschlossen ist. Diese Tür ist um eine vertikale Achse um einen Winkel von 270° schwenkbar. Sie ist zweckmäßigerweise an dem Randbereich des schwenkbaren Dacheckteiles angelenkt, das wiederum schwenkbar am verschiebbaren Dachelement gelagert ist. Zunächst wird dann diese Tür bzw. Klappe von der Schließstellung um einen Winkel von 270° geschwenkt. Anschließend wird das Dacheckteil in die Horizontallage bzw. in die leicht dagegen geneigte Lage gebracht. Die Tür oder die Klappe liegt dann auf dem Dacheckteil auf.

Anhang der beiliegenden Zeichnungen wird die Erfindung noch näher erläutert. Es zeigen:
- Figur 1: einen erfindungsgemäßen Verkaufswagen in Form eines Verkaufsanhängers in perspektivischer Darstellung, rein schematisch,
- Figur 2: eine Teildraufsicht des einen Endes mit dem eingefahrenen Dachflächenteil in einer ersten Ausführung,
- Figur 3: das Ende eines Verkaufsanhängers mit ausgefahrenem Dachflächenteil,
- Figur 4: das Ende eines Verkaufsanhängers mit ausgefahrenem Dachflächenteil in einer zweiten Ausführung,
- Figur 5: eine weitere Ausführungsform in einer Draufsicht, rein schematisch und
- Figur 6: die Schienenanordnung für die Ausführung nach der Figur 5 in einer Stirn- ansicht,
- Figur 7: eine das Heck und gegebenenfalls die Frontpartie verschließende Klappe in der Schließstellung,

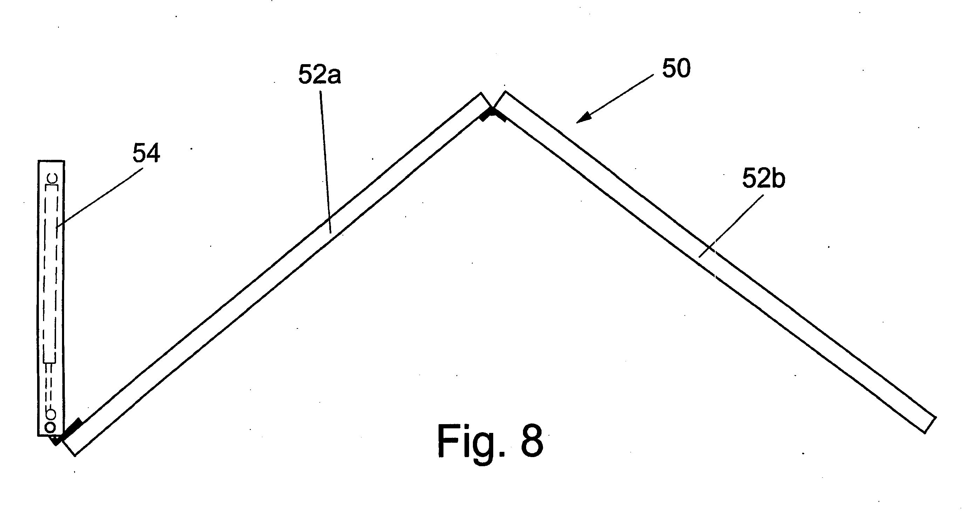

- Figur 8: die Klappe gemäß der Figur 7 in einer Zwischenstellung und
- Figur 9: die Klappe in der Offenstellung.

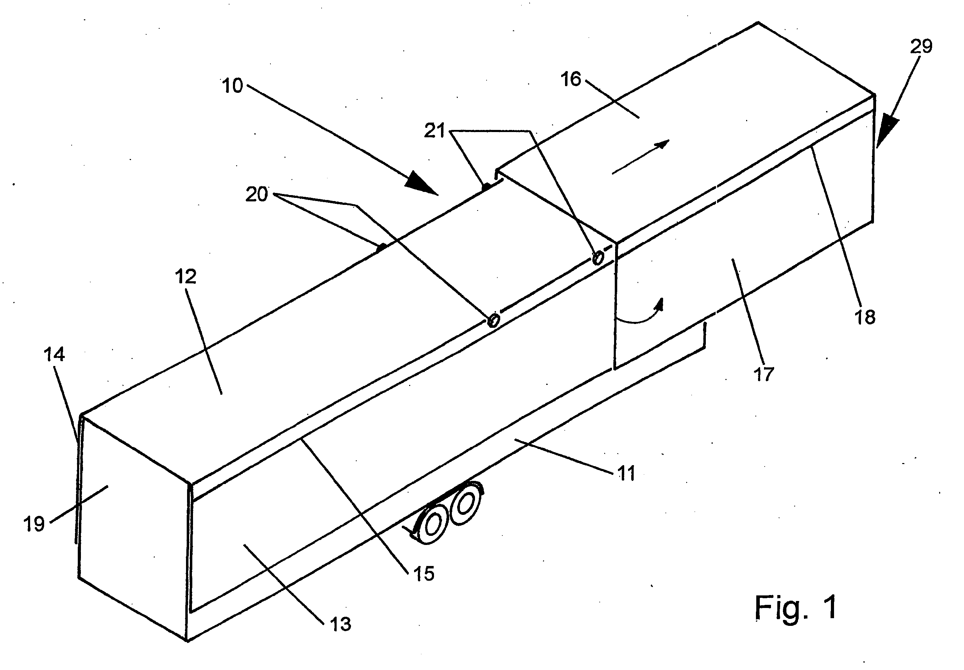

Der in der Figur 1 dargestellte Verkaufswagen in Form eines Verkaufsanhängers 10 besteht aus einem nicht näher erläuterten Fahrgestell 11 und einem in der Fahrstellung allseitig geschlossenen Aufbau. Dieser Aufbau weist ein ortsfestes Dachelement 12 auf, welches über nicht näher dargestellte Pfosten mit dem Fahrgestell 11 verbunden ist. Das ortsfeste Dachelement 12 ist im Querschnitt umgekehrt U-förmig gestaltet, wobei die beiden parallelen Schenkel eine Höhe aufweisen, die wesentlich geringer ist als die Breite des ortsfesten Dachelements 12. Aus der Figur 1 ist erkennbar, dass an den freien unteren Rändern der parallelen Schenkel Seitenwände 13, 14 schwenkbar angelenkt sind. Dies kann beispielsweise durch entsprechend ausgelegte Scharniere erfolgen. Die Schwenkachse ist durch das Bezugszeichen 15 gekennzeichnet. Die Seitenwände 13, 14 können in nicht näher dargestellter Weise von der hängenden Fahrstellung in eine schützende Verkaufsstellung geschwenkt werden. Dabei sollte der Winkel knapp unter 90° liegen, damit die Seitenwände 13, 14 ein klein wenig gegen die Horizontale geneigt sind, damit Regenwasser abfließen kann. Wie die Figur 1 zeigt, ist der Verkaufsanhänger 10 mit zwei dem ortfesten Dachelement 12 zugeordneten Schiebeelementen 16 ausgestattet, wobei aus Gründen einer vereinfachten Darstellung nur ein Schiebeelement 16 dargestellt ist. Dieses erstreckt sich in der Fahrstellung über die rechte Hälfte des ortsfesten Dachelementes 12. Ein gleichartiges Schiebeelement würde sich auch über die linke Hälfte des ortsfesten Dachelementes 12 erstrecken. Das Schiebeelement 16 ist im Querschnitt ebenfalls umgekehrt U-förmig ausgebildet und übergreift in der Fahrstellung das ortsfeste Dachelement 12. Die parallelen Schenkel des Schiebeelementes 16 stehen im Versatz zu den parallelen Schenkeln des ortsfesten Dachelementes 12. An den freien Rändern der parallelen Schenkel sind ebenfalls Seitenwände 17 schwenkbar gelagert, so dass die Seitenwände 17 ebenfalls von der hängenden Stellung in eine schützendes Stellung geschwenkt werden können. Die Schwenkachse ist durch das Bezugszeichen 18 gekennzeichnet.

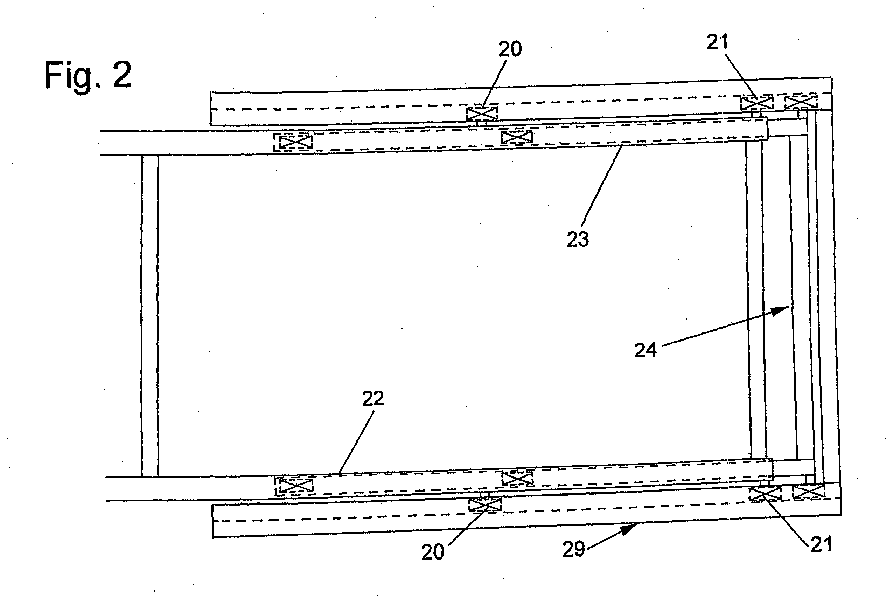

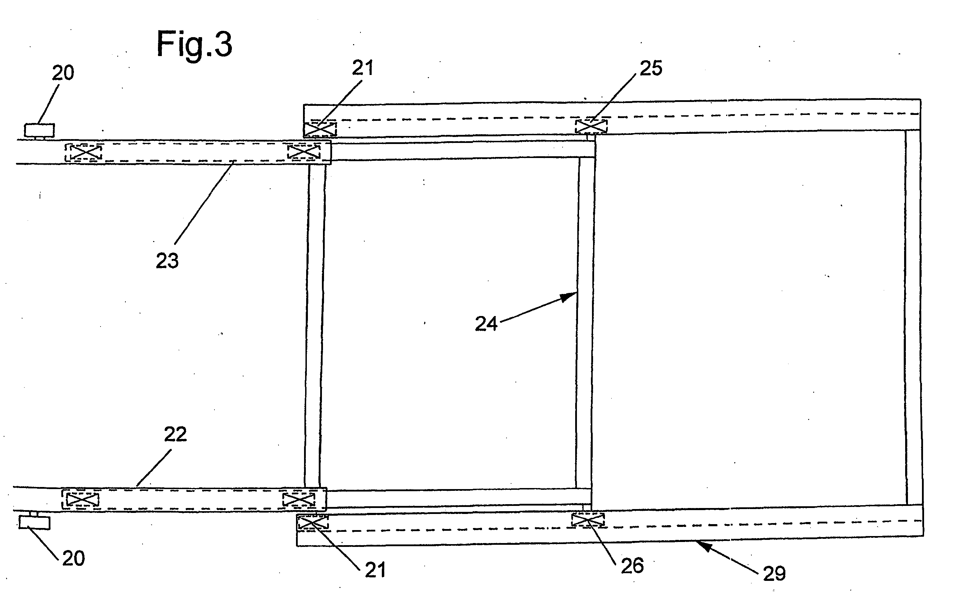

Es ergibt sich aus der Figur 1, dass in der Verkaufsstellung aus dem ortsfesten Dachelement 12, dem verschiebbaren Dachelement 16, den Seitenwänden 13, 14 und dem Dacheckteil 17 bzw. den Dacheckteilen 17 eine Gesamtdachfläche gebildet wird, die viereckig ist. Damit der Verkaufsanhänger von beiden Stirnseiten aus zugänglich ist, sind die Vorderwand 19 und die Rückwand als schwenkbare Türen ausgebildet. Dazu sind sie mittels Scharniere an den Rändern der Seitenwände 13 oder 14 bzw. an einem Dacheckteil 17 angeschlagen. Sie können demzufolge um eine vertikale Achse um einen Winkel von 270° geschwenkt werden. Dies erfolgt beim Aufstellen des Verkaufsanhängers bevor die Seitenwände 13, 14 oder das Dacheckteil 17 in die annähernd horizontale Stellung geschwenkt werden. Demzufolge liegen die Türen im ausgeschwenkten Zustand der Seitenwände 13, 14, und des Dacheckteils 17 oben auf den Seitenwänden 13, 14 oder auf dem Dacheckteil 17. Bei der Ausführung nach der Figur 1 kann die gesamte Dachfläche um die Länge des Verkaufsanhängers 10 vergrößert werden, sofern dieser mit zwei Schiebeelementen ausgestattet ist. Es ergibt sich aus der Figur, dass das Schiebeelement 29 zwischen der eingefahrenen und der ausgefahrenen Stellung stufenlos in jeder Stellung verbleiben kann. Dadurch lässt sich die Länge der Gesamtdachfläche an die örtlichen Gegebenheiten anpassen. Aus der Figur 1 ergibt sich noch, dass außenseitig an den parallelen Schenkeln des ortsfesten Dachelementes 12 Führungsrollen 20, 21 gelagert sind. In den Eckbereichen des ortsfesten Dachelementes 12 sind gemäß der Ausführung der Figuren 2 und 3 zwei Führungsprofile 22, 23 befestigt, die sich über die gesamte Länge des ortsfesten Dachelementes erstrecken. Diese Führungsprofile 22, 23 haben einen geschlossenen Querschnitt und sind in bevorzugter Ausführung Rohre mit quadratischen Querschnitten. In diesen Führungsprofilen 22, 23 ist ein Stützprofil 24 verschiebbar geführt. Das Stützprofil 24 ist in der Projektion gesehen, U-förmig gestaltet, wobei die beiden parallelen Schenkel in die Führungsprofile 22, 23 eingreifen. Wird das Schiebeelement 29 zunächst augefahren, übernehmen die Führungsrollen 20, 21 die Führungsposition. Das Stützprofil 24 verbleibt zunächst in der in der Figur 2 dargestellten, eingeschobenen Stellung. Durch einen nicht dargestellten Anschlag am Schiebeelement 29 schlägt dieser nach dem Ausfahren des Schiebeelementes 29 um die halbe Länge gegen die Quertraverse des Stützprofils 24, so dass beim weiteren Ausfahren des Schiebeelementes 16 dieses Stützprofil 24 synchron mitgenommen wird. Das Stützprofil 24 stellt in der in der Figur 3 dargestellten ausgefahrenen Stellung des Schiebeelementes 29 die Verbindung zu dem ortsfesten Dachelement 12 her. Dadurch wird auch in der vollständig ausgefahrenen Stellung jedes Schiebeelementes 29 eine ausreichende Eigenstabilität hergestellt, so dass auf zusätzliche vertikale Stützen für die Dacheckteile 17 verzichtet werden kann. Beim Einfahren des Schiebeelementes 29 verbleibt zunächst das Stützprofil 24 in der in der Figur 3 darstellten Stellung. Ist das Schiebeelement 29 um seine halbe Länge eingefahren, wird es mitgenommen und in die in der Figur 2 dargestellten Stellung eingefahren. Wie die Figuren 2 und 3 zeigen, sind auch an den äußeren und seitlichen Bereichen des Stützprofils 24 Führungsrollen 25, 26 gelagert.

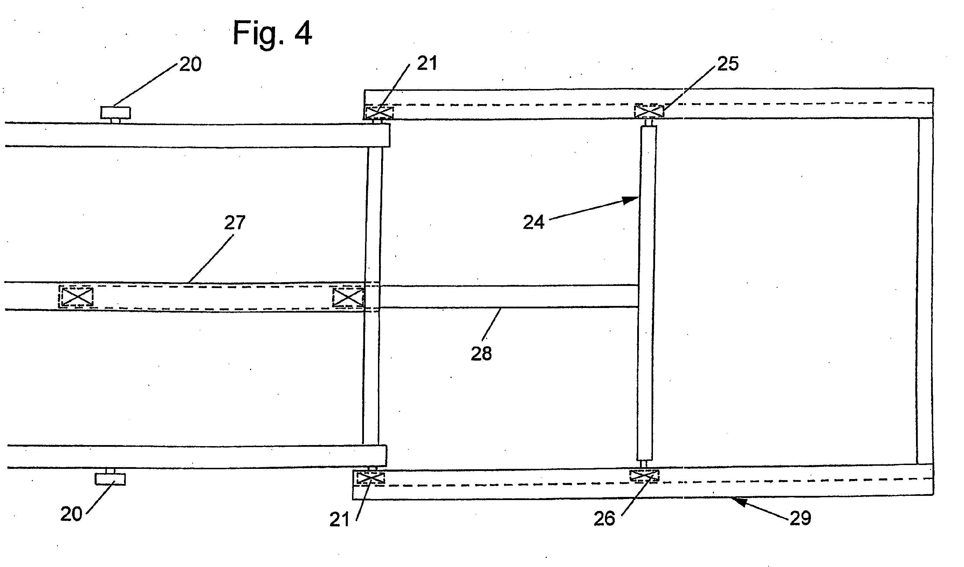

Bei der Ausführung nach der Figur 4 ist innenseitig im mittleren Bereich des ortsfesten Dachelementes 12 ein Führungsprofil 27 festgelegt. Das Stützprofil 24 ist auch bei dieser Ausführung mit einer Quertraverse versehen, an der die Führungsrollen 25, 26 gelagert sind und mit einem Längsholm 28 ausgestattet, der in dem Führungsprofil 27 schließend eingreift. Das Führungsprofil 27 und der Längsholm 28 sind aus Rohren mit quadratischen Querschnitten gefertigt. Auch bei dieser Ausführung bildet im vollständig ausgefahrenen Zustand des Schiebeelementes 29 das Stützprofil 24 die Verbindung zwischen dem ortsfesten Dachelement 12 und dem Schiebeelement 29.

In nicht näher dargestellter Weise könnten Leuchten an dem Führungsprofil 27 angebracht sein. Diese könnten jedoch auch in das Führungsprofil 27 integriert werden, wenn ein entsprechendes Profil gewählt wird.

In nicht näher dargestellter Weise können an den äußeren freien Rändern der Seitenwände 13, 14 und an jedem Dacheckteil 17 Profilschienen befestigt werden, in denen die Rollen von Planen eingeschoben werden, so dass sinngemäß der Verkaufswagen in der Verkaufsstellung rundherum zugehängt wird. Dadurch ist ein optimaler Witterungsschutz gegeben, dies gilt insbesondere bei winterlichen Temperaturen.

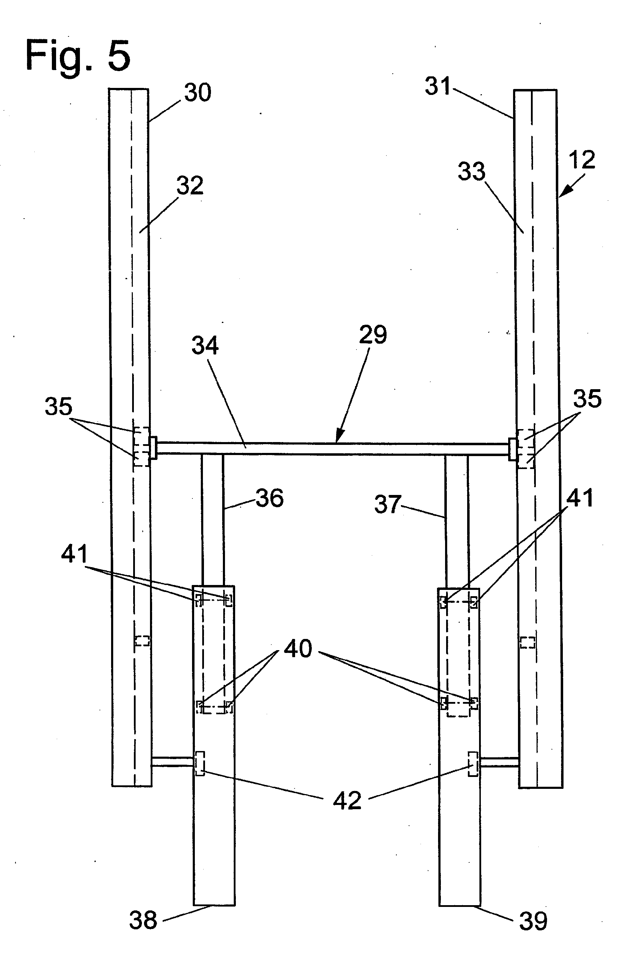

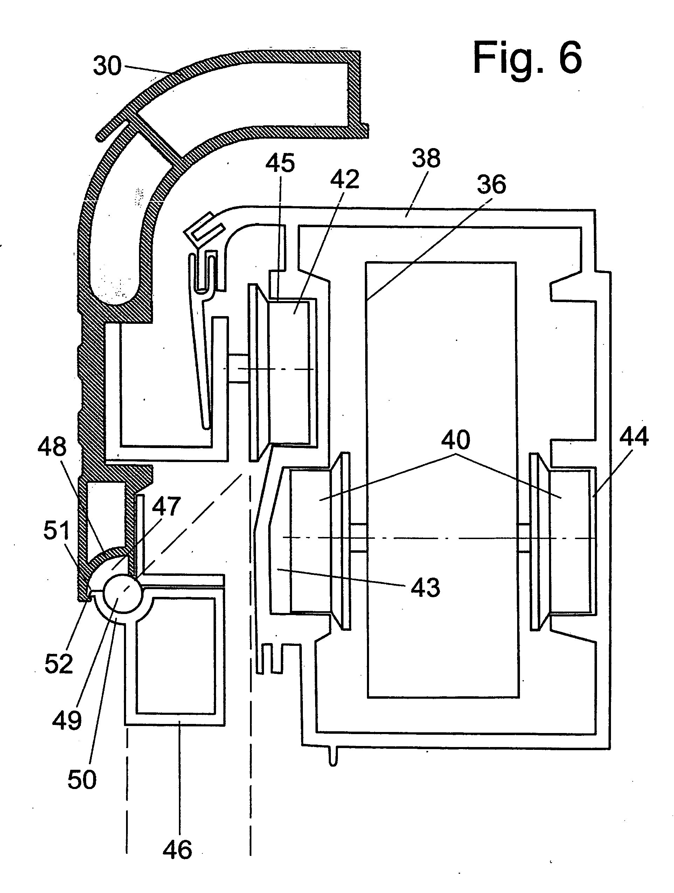

Bei dem Ausführungsbeispiel gemäß den Figuren 5 und 6 ist das ortsfeste Dachelement 12 mit zwei parallel und im Abstand zueinander verlaufenden Profilschienen 30, 31 ausgestattet, die die äußere Begrenzung des ortsfesten Dachelementes 12 bilden. An den inneren einander zugewandten Seiten sind gemäß der Figur 5 Führungsnuten 32, 33 vorgesehen. Das Schiebeelement 29 besteht aus zwei Elementen, die teleskopartig gegeneinander verschiebbar sind. Das erste Schiebeelement besteht aus einer Quertraverse 34 auf deren Endbereiche paarweise angeordnete Führungsrollen 35 frei drehbar gelagert sind. An der Quertraverse 34 sind zwei Führungsschienen 36, 37 festgelegt, die parallel und im Abstand zu den Profilstangen 30, 31 verlaufen. Wie die Figur 6 zeigt, bestehen die Führungsschienen 36, 37 aus Rechteckrohren, deren Breiten geringer sind als deren Höhen. Diese Führungsschienen 36, 37 bestehen aus Stahl. Diese Führungsschienen 36, 37 sind von Profilstangen 38, 39 mit geschlossenen Querschnitten umgeben, wie insbesondere die Figur 6 zeigt. An den Führungsschienen 36, 37 sind in den Endbereichen, d.h. der Quertraverse 34 abgewandt und im mittleren Bereich paarweise angeordnete Laufrollen 40, 41 frei drehbar gelagert. Die Profilstangen 38, 39 sind Bauteile des zweiten Schiebeelementes.

Es ergibt sich aus der Figur 5, dass die Laufrollen 40, 41 eine exakte Führung für die Profilstangen 38, 39 bilden. Werden diese Profilstangen 38, 39 noch weiter ausgefahren, übernehmen die Laufrollen 40 und zwei weitere Laufrollen 42 die Führung der Profilstangen 38, 39. Die Figur 6 zeigt deutlich, dass die Laufrollen 40 in Nuten 43, 44 geführt sind. Diese Nuten 43, 44 erstrecken sich von der Innenseite der hochkant stehenden Schenkel und sind durch entsprechende Stege begrenzt. An der der Profilschiene 30 zugewandten Seite ist eine weitere Nut 45 vorgesehen, in die die Laufrollen 42 eingreifen. Die Nuten 43, 45 sind gegeneinander höhenversetzt. Ferner zeigt noch die Figur 6, dass die Profilstangen 38 einen geschlossenen Querschnitt aufweisen.

Die Figur 6 zeigt ferner, dass im unteren Bereich jeder seitlichen Profilschiene 30 an einem Hohlprofil 46 eine Seitenwand oder ein Dacheckteil schwenkbar gelagert ist. Dazu weist die Profilschiene 30 eine viertelkreisförmige Nut 47 auf, die von einem Steg 48 der Profilschiene 30 und von einer sich in Längsrichtung des Daches erstreckende Rundstange 49 begrenzt ist. Dazu ist an der Profilschiene 46 ein viertelkreisförmiger Ausleger 50 angeformt, der gegenüber der Profilschiene 46 nach außen versetzt ist. An dem Ausleger 50 ist eine Nase 51 angeformt, die in der senkrechten Stellung der Seitenwand bzw. des Dacheckteiles gegen eine Nase des die Nut 47 begrenzenden Steges schlägt. Bei der Ausführung nach den Figuren 5 und 6 sind aus Darstellungsgründen die Seitenwände, die Dacheckteile und die Dachabdeckungen nicht dargestellt.

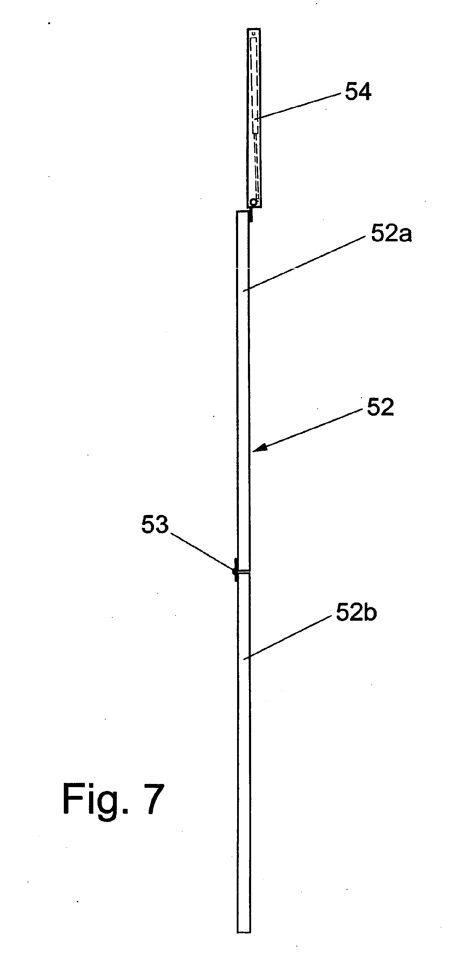

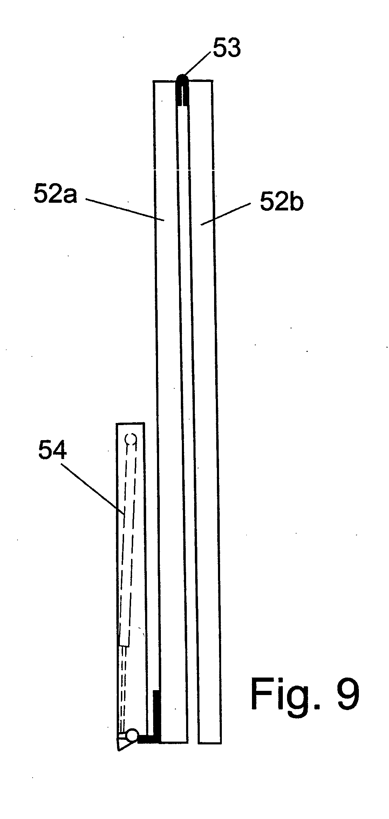

Die Figur 7 zeigt eine zum Verschließen des Hecks und gegebenenfalls der Frontpartie des Verkaufswagens verschließende Klappe 52, die aus den beiden Klappenteilen 52a und 52b gebildet ist. Die Figur 7 zeigt die Schließstellung. Die beiden Klappenteilen 52a und 52b sind durch Scharniere 53 oder durch ein Scharnierband gelenkig miteinander verbunden. An dem Schiebeelement ist im oberen Bereich ein als Hebehilfe wirkender Linearantrieb angelenkt, der im dargestellten Ausführungsbeispiel als Gasfeder 54 ausgebildet ist. Wie die Figur zeigt, ist die Kolbenstange an den oberen Rand der oberen Klappe 52 angelenkt. Zum Überführen der Klappe 52 in die Offenstellung gemäß der Figur 9 werden zunächst die beiden Klappenteile in eine Winkelstellung verfahren. Wenn die beiden Klappenteile 52a und 52b in einem bestimmten Winkel zueinander stehen, wird die Gasfeder 54 aktiv, so dass sinngemäß selbsttätig die beiden Klappenteile 52a und 52b in die Offenstellung gemäß der Figur 9 geschwenkt werden. Das Überführen in die Schließstellung erfolgt in der umgekehrten Reihenfolge.

Die Erfindung ist nicht auf die dargestellten Ausführungsbeispiele beschränkt. Wesentlich ist, dass dem ortsfesten Dachelement 12 je nach Gestaltung als selbstfahrender Verkaufswagen oder als Verkaufsanhänger ein oder zwei Schiebeelemente 29 funktionell zugeordnet werden, so dass die Länge der Gesamtdachfläche verändert werden kann. Darüber hinaus ist von Bedeutung, dass mittels des Stützprofils 24 die Verbindung zwischen dem ortsfesten Dachelement 12 und dem verschiebbaren Dachelement 29 hergestellt werden kann, so dass auf seitliche Stützen verzichtet werden kann.

## Patentansprüche

1. Verkaufswagen (10) mit einem ortsfesten Dachelement (12), an den zumindest an einer Längsseite eine oder mehrere Seitenwände (13, 14) schwenkbar gelagert sind, mit wenigstens einem Dacheckteil und bei dem zumindest aus der Dachfläche des ortsfesten Dachelements (12), der schwenkbaren Seitenwand bzw. den schwenkbaren Seitenwänden (13, 14) und dem Dacheckteil (17) bzw. dem Dacheckteilen (17) in der Verkaufsstellung des Verkaufswagens eine Gesamtdachfläche bildbar ist, wobei dem ortsfesten Dachelement (12) wenigstens ein Schiebeelement (29) zugeordnet ist, wobei das ortsfeste Dachelement (12) eine Führung für jedes Schiebeelement (29) derart bildet, dass jedes Schiebeelement (29) in Richtung der Längskanten des ortsfesten Dachelementes (12) verfahrbar ist, und wobei jedes Schiebeelement (29) aus einem verschiebbaren Dachelement (16) und wenigstens einer Seitenwand und/oder einem schwenkbar daran gelagerten Dacheckteil (17) besteht, **dadurch gekennzeichnet, dass** das ortsfeste Dachelement (12) an den Längsseiten mit jeweils einer Profilschiene (30, 31) versehen ist, die an den inneren, einander zugewandten Seiten mit mindestens einer Führungsrolle versehen ist, dass in einem oder in beiden Endbereichen jeder Profilschiene (30, 31) an den einander zugewandten Seiten Bolzen eingesetzt sind, auf denen jeweils eine Führungsrolle (42) zur Führung des Schiebeelementes (29) frei drehbar gelagert ist, dass jedes verschiebbare Dachelement (16) teleskopierbar ist und wenigstens zwei gegenüber dem ortsfesten Dachelement (12) verschiebbare Dachelemente aufweist, und dass ein erstes, ausschließlich gegenüber dem ortsfesten Dachelement (12) verschiebbares Schiebeelement (29) eine Quertraverse (34) aufweist, die, in Ausfahrrichtung gesehen, hinteren Bereich angeordnet und die eine endseitig mit jeweils mindestens einer Führungsrolle (35) versehen ist.

2. Verkaufswagen (10) mit einem ortsfesten Dachelement (12), an den zumindest an einer Längsseite eine oder mehrere Seitenwände (13, 14) schwenkbar gelagert sind, mit wenigstens einem Dacheckteil und bei dem zumindest aus der Dachfläche des ortsfesten Dachelements (12), der schwenkbaren Seitenwand bzw. den schwenkbaren Seitenwänden (13, 14) und dem Dacheckteil (17) bzw. dem Dacheckteilen (17) in der Verkaufsstellung des Verkaufswagens eine Gesamtdachfläche bildbar ist, wobei dem ortsfesten Dachelement (12) wenigstens ein Schiebeelement (29) zugeordnet ist, wobei das ortsfeste Dachelement (12) eine Führung für jedes Schiebeelement (29) derart bildet, dass jedes Schiebeelement (29) in Richtung der Längskanten des ortsfesten Dachelementes (12) verfahrbar ist, und wobei jedes Schiebeelement (29) aus einem verschiebbaren Dachelement (16) und wenigstens einer Seitenwand und/oder einem schwenkbar daran gelagerten Dacheckteil (17) besteht, **dadurch gekennzeichnet, dass** in den Eckbereichen des ortsfesten Dachelementes (12) innenseitig und sich in Längsrichtung erstreckende Führungsprofile (22, 23) festgelegt sind, in die ein als Teil des Schiebeelements ausgebildetes Stützprofil (24) geführt ist, dass das Stützprofil (24) U-förmig ausgebildet ist, und dass die parallelen Schenkel in den Führungsprofilen (22, 23) geführt sind, oder dass im mittleren Bereich des ortsfesten Dachelementes (12) an der Innenseite ein sich in Längsrichtung erstreckendes Führungsprofil (27) festgelegt ist, in dem ein als Teil des Schiebeelements ausgebildetes Stützprofil (24) verschiebbar geführt ist, welches aus einer Quertraverse und einem in dem Führungsprofil (27) verschiebbar geführten Längsholm (28) besteht.

3. Verkaufswagen nach Anspruch 1 oder 2, **dadurch gekennzeichnet, dass** jedes Schiebeelement (29) stufenlos verfahrbar ist.

4. Verkaufswagen nach Anspruch 1 oder 2, **dadurch gekennzeichnet, dass** die Gesamtdachfläche stützenfrei bildbar ist.

5. Verkaufswagen nach Anspruch 1 oder 2, **dadurch gekennzeichnet, dass** jede verschiebbare Dachelement (16) in einer zum ortsfesten Dachelement (12) angrenzenden Ebene verfahrbar ist.

6. Verkaufswagen nach Anspruch 1 oder 2, **dadurch gekennzeichnet, dass** jedes Schiebeelement (29) der Breite des ortsfesten Dachelementes (12) angepasst ist.

7. Verkaufswagen nach Anspruch 1 oder 2, **dadurch gekennzeichnet, dass** jedes verschiebbare Dachelement (16) gegenüber dem ortsfesten Dachelement (12) nach innen versetzt ist, und dass in dem Zwischenraum Führungselemente (36, 37, 40, 41, 42) angeordnet sind.

8. Verkaufswagen nach Anspruch 1 oder 2, **dadurch gekennzeichnet, dass** dem ortsfesten Dachelement (12) zwei verschiebbare Dachelemente (16) zugeordnet sind.

9. Verkaufswagen nach Anspruch 8, **dadurch gekennzeichnet, dass** die Länge jedes Schiebeelementes (16) der halben Länge oder annähernd der halben Länge des ortsfesten Dachelementes (12) entspricht oder annähernd entspricht.

10. Verkaufswagen nach Anspruch 8, **dadurch gekennzeichnet, dass** die der Rückwand und der frontseitigen Wand zugeordneten, verschiebbaren Dachelemente (16) in entgegengesetzten Richtungen verfahrbar sind.

11. Verkaufswagen nach Anspruch 2, **dadurch gekennzeichnet, dass** das ortsfeste Dachelement (12) an den Längsseiten mit jeweils einer Profilschiene (30, 31) versehen ist, die an den inneren, einander zugewandten Seiten mit mindestens einer Führungsrolle versehen ist.

12. Verkaufswagen nach Anspruch 1, **dadurch gekennzeichnet, dass** an der Quertraverse (34) in den Endbereichen zwei parallel zu den Profilschienen (32, 33) des ortsfesten Dachelementes (12) verlaufende Führungsschienen (36, 37) befestigt sind, die als Tragteile für ein ausschließlich gegenüber dem ortsfesten Dachelement (12) verschiebbares Dachelement ausgelegt sind.

13. Verkaufswagen nach Anspruch 12, **dadurch gekennzeichnet, dass** an den Führungsschienen (36, 37) an einer Seite oder an beiden Seiten Laufrollen (40, 41) frei drehbar gelagert sind.

14. Verkaufswagen nach Anspruch 13, **dadurch gekennzeichnet, dass** die Laufrollen (40, 41) im vorderen und mittleren Bereich der Führungsschienen (36, 37) paarweise angeordnet sind.

15. Verkaufswagen nach Anspruch 12, **dadurch gekennzeichnet, dass** die Führungsschienen (36, 37) eine Führung für die Führungsschienen (36, 37) umgreifende Profilstangen (38, 39) sind, die Teil eines zweiten, gegenüber dem ortsfesten und dem ersten Dachelement (12, 16) verfahrbares Dachelement sind.

16. Verkaufswagen nach Anspruch 15, **dadurch gekennzeichnet, dass** die Profilstangen (38, 39) geschlossene Querschnitte aufweisen.

17. Verkaufswagen nach Anspruch 12, **dadurch gekennzeichnet, dass** der dem ortsfesten Dachelement (12) zugewandte Schenkel jeder Profilstange innenseitig und außenseitig jeweils eine Längsnut (43, 45) aufweist, und dass in die innenseitige Längsnut (43) die Laufrollen (40) der zugehörigen Laufschiene (36 bzw. 37) eingreifen, und dass in die außenseitige Längsnut (45) die an dem ortsfesten Dachelement angeordneten Führungsrollen (42) eingreifen.

18. Verkaufswagen nach Anspruch 17, **dadurch gekennzeichnet, dass** die innenseitige Längsnut (43) gegenüber der außenseitigen Längsnut (45) höhenversetzt ist.

19. Verkaufswagen nach Anspruch 18, **dadurch gekennzeichnet, dass** die innenseitige Längsnut (43) gegenüber der außenseitigen Längsnut ((45) gegenüber dem ortsfesten Dachelement (12) bzw. der ortsfesten Profilschiene (30) nach unten versetzt ist.

20. Verkaufswagen nach Anspruch 1, **dadurch gekennzeichnet, dass** der gegenüberliegende, der Profilschiene (30) des ortsfesten Dachelementes (12) abgewandte Schenkel innenseitig wenigstens eine Längsnut (44) aufweist, in die an der Führungsschiene (36, 37) angeordnete Laufrollen (40) eingreifen.

21. Verkaufswagen nach Anspruch 20, **dadurch gekennzeichnet, dass** der Schenkel innenseitig zwei übereinander angeordnete Längsnuten aufweist, und dass in wenigstens eine Längsnut Laufrollern (40) eingreifen.

22. Verkaufswagen nach Anspruch 1 oder 2, **dadurch gekennzeichnet, dass** jedes verschiebbare Dachelement (16) gegenüber dem ortsfesten Dachelement (12) nach außen versetzt ist, und dass in dem Zwischenraum Führungselemente (20, 21, 24, 25, 26) für das jeweilige zu verschiebende Dachelement (16) angeordnet sind.

23. Verkaufswagen nach einem oder mehreren der vorstehenden Ansprüche, **dadurch gekennzeichnet, dass** das ortsfeste Dachelement (12) und jedes verschiebbare Dachelement (16) im Querschnitt umgekehrt U-förmig ausgebildet sind, wobei die Höhen der parallelen äußeren Schenkel wesentlich geringer sind als die Breite des ortsfesten Dachelementes (12) bzw. des zu verschiebenden Dachelementes (16).

24. Verkaufswagen nach Anspruch 23, **dadurch gekennzeichnet, dass** die parallelen Schenkel jedes zu verschiebenden Dachelementes (16) im Abstand zu den Längskanten des ortsfesten Dachelementes (12) stehen und dass die Führungselemente (20, 21, 25, 26) in dem Abstandsraum angeordnet sind.

25. Verkaufswagen nach Anspruch 1 oder 2, der als selbstfahrendes Fahrzeug ausgebildet ist, **dadurch gekenzeichnet, dass** dem ortsfesten Dachelement (12) ein verschiebbares Dachelement (16) zugeordnet ist, und dass die Länge des verschiebbaren Dachelementes (16) der halben Länge des Aufbaus entspricht oder annähernd entspricht.

26. Verkaufswagen nach einem oder mehreren der vorstehenden Ansprüche, **dadurch gekennzeichnet, dass** der Verkaufswagen (10) zumindest an der Heckseite eine querstehende Klappe (52) aufweist, die um eine im oberen Bereich liegende horizontale Achse schwenkbar ist.

27. Verkaufswagen nach Anspruch 26, **dadurch gekennzeichnet, dass** die Klappe (52) aus mehreren Klappenteilen, vorzugsweise aus zwei Klappenteilen (52a und 52b) gebildet ist, und dass die Klappenteile durch Scharniere oder durch ein Scharnierband (53) gelenkig miteinander verbunden sind.

28. Verkaufswagen nach Anspruch 27, **dadurch gekennzeichnet, dass** die Klappenteile größenmäßig gleich ausgebildet und gleichartig gestaltet sind.

29. Verkaufswagen nach Anspruch 27, **dadurch gekennzeichnet, dass** vorzugsweise am Schiebeelement (29) im oberen Bereich ein als Hebehilfe wirkender Linearantrieb, vorzugsweise eine Gasfeder, angelenkt ist, dessen Antriebsglied, bezogen auf die Schließstellung der Klappe (52) an den oberen Rand der oberen Klappe (52) angelenkt ist.

30. Verkaufswagen nach einem oder mehreren der vorstehenden Ansprüche, **dadurch gekennzeichnet, dass** innenseitig am ortsfesten Dachelement (12) eine oder mehrere Leuchten angeordnet sind, die vorzugsweise an dem mittleren Führungsprofil (27) angeordnet oder in dieses Führungsprofil (27) integriert sind.

31. Verkaufswagen nach einem oder mehreren der vorstehenden Ansprüche, **dadurch gekennzeichnet, dass** jedem Schiebeelement (29) ein Verstellantrieb zugeordnet ist.

32. Verkaufswagen nach Anspruch 31, **dadurch gekennzeichnet, dass** der Verstellantrieb als elektromotorischer Linearantrieb oder als pneumatisch betriebene Kolben-Zylinder-Einheit ausgebildet ist.

33. Verkaufswagen nach Anspruch 32, **dadurch gekennzeichnet, dass** zumindest an einer Seite des ortsfesten Dachelements (12) und zumindest an einer Seite jedes zu verschiebenden Dachelementes (16) um horizontale Achsen (15, 18) schwenkbare Seitenwände (13, 14) und ein Dacheckleil (17) angelenkt sind.

34. Verkaufswagen nach Anspruch 33, **dadurch gekennzeichnet, dass** zumindest an den freien Längskanten der schwenkbaren Seitenwände (13, 14) und jedes Dacheckteiles (17) innenseitig Profilschienen zur Halterung einer Plane festgelegt sind.

35. Verlaufswagen nach Anspruch 34, **dadurch gekennzeichnet, dass** an den äußeren, quer zur Verschieberichtung der Schiebeelemente (29) stehenden Kanten Profilschienen zur Aufnahme von Planen festgelegt sind.

36. Verkaufswagen nach Anspruch 1 oder 2, **dadurch gekennzeichnet, dass** an den schwenkbaren Dacheckteilen (17) jedes Schiebeelementes (29) ein die Rückwand und ggf. die Vorderwand (19) bildende Tür schwenkbar gelagert ist, wobei die Schwenkachse eine vertikale Achse ist und der Schwenkwinkel 270° beträgt.

## Claims

1. Sales truck (10) comprising a fixed roof element (12), on which, at least on one longitudinal side, one or more side walls (13, 14) are pivotably mounted, comprising at least one roof corner part, and in which, at least from the roof surface of the fixed roof element (12), from the pivotable side wall or the pivotable side walls (13, 14), and from the roof corner part (17) or the roof corner parts (17), in the sales position of the sales truck, a total roof surface can be formed, wherein the fixed roof element (12) is assigned at least one sliding element (29), wherein the fixed roof element (12) forms a guide for each sliding element (29) such that each sliding element (29) is movable in the direction of the longitudinal edges of the fixed roof element (12), and wherein each sliding element (29) consists of a displaceable roof element (16) and at least one side wall and/or a roof corner part (17) mounted pivotably thereon, **characterized in that** the fixed roof element (12) is provided on the longitudinal sides with respectively a profiled rail (30, 31) provided on the inner, mutually facing sides with at least one guide roller, **in that** in one or in both end regions of each profiled rail (30, 31), on the mutually facing sides, bolts are inserted, on which respectively a guide roller (42) for guiding the sliding element (29) is mounted in a freely rotatable manner, **in that** each displaceable roof element (16) is telescopable and has at least two roof elements displaceable in relation to the fixed roof element (12), and **in that** a first sliding element (29), which is displaceable solely in relation to the fixed roof element (12), has a transverse member (34), which is arranged in the rear region, viewed in the direction of extension, and which is provided on the end side with respectively at least one guide roller (35).

2. Sales truck (10) comprising a fixed roof element (12), on which, at least on one longitudinal side, one or more side walls (13, 14) are pivotably mounted, comprising at least one roof corner part, and in which, at least from the roof surface of the fixed roof element (12), from the pivotable side wall or the pivotable side walls (13, 14), and from the roof corner part (17) or the roof corner parts (17), in the sales position of the sales truck, a total roof surface can be formed, wherein the fixed roof element (12) is assigned at least one sliding element (29), wherein the fixed roof element (12) forms a guide for each sliding element (29) such that each sliding element (29) is movable in the direction of the longitudinal edges of the fixed roof element (12), and wherein each sliding element (29) consists of a displaceable roof element (16) and at least one side wall and/or a roof corner part (17) mounted pivotably thereon, **characterized in that** in the corner regions of the fixed roof element (12) there are fixed, on the inner side, longitudinally extending guide profiles (22, 23), into which a supporting profile (24), configured as part of the sliding element, is guided, and **in that** the supporting profile (24) is of U-shaped configuration, and **in that** the parallel branches are guided in the guide profiles (22, 23), or **in that** in the middle region of the fixed roof element (12), on the inner side, a longitudinally extending guide profile (27) is fixed, in which a supporting profile (24) is displaceably guided, which consists of a transverse member and a longitudinal member (28) displaceably guided in the guide profile (27).

3. Sales truck according to Claim 1 or 2, **characterized in that** each sliding element (29) is steplessly movable.

4. Sales truck according to Claim 1 or 2, **characterized in that** the total roof surface can be formed free of supports.

5. Sales truck according to Claim 1 or 2, **characterized in that** each displaceable roof element (16) is movable in a plane bordering the fixed roof element (12).

6. Sales truck according to Claim 1 or 2, **characterized in that** each sliding element (29) is matched to the width of the fixed roof element (12).

7. Sales truck according to Claim 1 or 2, **characterized in that** each displaceable roof element (16) is offset inwards in relation to the fixed roof element (12), and **in that** guide elements (36, 37, 40, 41, 42) are arranged in the interspace.

8. Sales truck according to Claim 1 or 2, **characterized in that** the fixed roof element (12) is assigned two displaceable roof elements (16).

9. Sales truck according to Claim 8, **characterized in that** the length of each sliding element (16) corresponds or approximately corresponds to half the length or approximately half the length of the fixed roof element (12).

10. Sales truck according to Claim 8, **characterized in that** the displaceable roof elements (16) assigned to the rear wall and the front wall are movable in opposite directions.

11. Sales truck according to Claim 2, **characterized in that** the fixed roof element (12) is provided on the longitudinal sides with respectively a profiled rail (30, 31), which on the inner, mutually facing sides is provided with at least one guide roller.

12. Sales truck according to Claim 1, **characterized in that** fastened to the transverse member (34), in the end regions, are two guide rails (36, 37) running parallel to the profiled rails (32, 33) of the fixed roof element (12), which guide rails are designed as supporting structures for a roof element which is displaceable solely in relation to the fixed roof element (12).

13. Sales truck according to Claim 12, **characterized in that** on the guide rails (36, 37), on one side or on both sides, running rollers (40, 41) are mounted in a freely rotatable manner.

14. Sales truck according to Claim 13, **characterized in that** the running rollers (40, 41) are arranged in pairs in the front and middle region of the guide rails (36, 37).

15. Sales truck according to Claim 12, **characterized in that** the guide rails (36, 37) are a guide for profiled bars (38, 39) embracing the guide rails (36, 37), which profiled bars are part of a second roof element movable in relation to the fixed and the first roof element (12, 16).

16. Sales truck according to Claim 15, **characterized in that** the profiled bars (38, 39) have closed cross sections.

17. Sales truck according to Claim 12, **characterized in that** that branch of each profiled bar which is facing the fixed roof element (12) has respectively on the inner side and on the outer side a longitudinal groove (43, 45), and **in that** the running rollers (40) of the associated running rail (36 and 37) engage in the inside longitudinal groove (43), and **in that** the guide rollers (42) arranged on the fixed roof element engage in the outside longitudinal groove (45).

18. Sales truck according to Claim 17, **characterized in that** the inside longitudinal groove (43) is vertically offset in relation to the outside longitudinal groove (45).

19. Sales truck according to Claim 18, **characterized in that** the inside longitudinal groove (43) is offset downwards in relation to the outside longitudinal groove (45) and in relation to the fixed roof element (12) or the fixed profiled rail (30).

20. Sales truck according to Claim 1, **characterized in that** the opposite branch facing away from the profiled rail (30) of the fixed roof element (12) has on the inner side at least one longitudinal groove (44), in which running rollers (40) arranged on the guide rail (36, 37) engage.

21. Sales truck according to Claim 20, **characterized in that** the branch has on the inner side two longitudinal grooves arranged one above the other, and **in that** running rollers (40) engage in at least one longitudinal groove.

22. Sales truck according to Claim 1 or 2, **characterized in that** each displaceable roof element (16) is offset outwards in relation to the fixed roof element (12), and **in that** guide elements (20, 21, 24, 25, 26) for the respective roof element (16) to be displaced are arranged in the interspace.

23. Sales truck according to one or more of the preceding claims, **characterized in that** the fixed roof element (12) and each displaceable roof element (16) are of inversely U-shaped configuration in cross section, the heights of the parallel outer branches being substantially less than the width of the fixed roof element (12) and of the roof element (16) to be displaced.

24. Sales truck according to Claim 23, **characterized in that** the parallel branches of each roof element (16) to be displaced stand at a distance to the longitudinal edges of the fixed roof element (12), and **in that** the guide elements (20, 21, 25, 26) are arranged in the interspace.

25. Sales truck according to Claim 1 or 2, which is configured as a self-propelled vehicle, **characterized in that** the fixed roof element (12) is assigned a displaceable roof element (16), and **in that** the length of the displaceable roof element (16) corresponds or approximately corresponds to half the length of the vehicle body.

26. Sales truck according to one or more of the preceding claims, **characterized in that** the sales truck (10) has, at least on the tail side, a transverse gate (52), which is pivotable about a horizontal axis lying in the upper region.

27. Sales truck according to Claim 26, **characterized in that** the gate (52) is formed from a plurality of gate parts, preferably of two gate parts (52a and 52b), and **in that** the gate parts are articulately connected to each other by hinges or by a hinge band (53).

28. Sales truck according to Claim 27, **characterized in that** the gate parts are configured equal in size and are homogeneously shaped.

29. Sales truck according to Claim 27, **characterized in that** a linear drive, preferably a gas spring, acting as a lifting aid, is preferably attached to the sliding element (29) in the upper region, the power-take-off member of which linear drive, related to the closing position of the gate (52), is attached to the upper margin of the upper gate (52).

30. Sales truck according to one or more of the preceding claims, **characterized in that** on the inner side of the fixed roof element (12) there are arranged one or more lights, which preferably are arranged on the middle guide profile (27) or are integrated in this guide profile (27).

31. Sales truck according to one or more of the preceding claims, **characterized in that** each sliding element (29) is assigned an adjusting drive.

32. Sales truck according to Claim 31, **characterized in that** the adjusting drive is configured as an electromotive linear drive or as a pneumatically operated piston-cylinder unit.

33. Sales truck according to Claim 32, **characterized in that** side walls (13, 14), which are pivotable about horizontal axes (15, 18), and a roof corner part (17), are attached at least to one side of the fixed roof element (12) and at least to one side of each roof element (16) to be displaced.

34. Sales truck according to Claim 33, **characterized in that** profiled rails for the securement of a tarpaulin are fixed at least to the free longitudinal edges of the pivotable side walls (13, 14) and of each roof corner part (17) on the inner side.

35. Sales truck according to Claim 34, **characterized in that** profiled rails for the reception of tarpaulins are fixed to the outer edges standing transversely to the direction of displacement of the sliding elements (29).

36. Sales truck according to Claim 1 or 2, **characterized in that** a door forming the rear wall and, where appropriate, the front wall (19) is pivotably mounted on the pivotable roof corner parts (17) of each sliding element (29), the pivot axis being a vertical axis and the pivot angle amounting to 270°.

## Revendications

1. Véhicule-magasin (10), comportant un élément de toit fixe (12), contre lequel, sur au moins un côté longitudinal, une ou plusieurs parois latérales (13, 14) sont montées pivotantes, comportant au moins un panneau de rive du toit, et dans lequel, dans la position de vente du véhicule-magasin, une surface de toit globale peut être formée au moins à partir de la surface de l'élément de toit fixe (12), de la paroi latérale pivotante ou des parois latérales pivotantes (13, 14) et du panneau de rive du toit ou des panneaux de rive du toit (17), au moins un élément coulissant (29) étant associé à l'élément de toit fixe (12), ledit élément de toit fixe (12) formant un guidage pour chaque élément coulissant (29), de telle sorte que chaque élément coulissant (29) peut coulisser dans la direction des bords longitudinaux de l'élément de toit fixe (12), et chaque élément coulissant (29) étant formé par un élément de toit coulissant (16) et au moins une paroi latérale et/ou un panneau de rive du toit (17) monté pivotant contre celle-ci, **caractérisé en ce que** l'élément de toit fixe (12) est muni sur chacun de ses côtés longitudinaux d'un rail profilé (30, 31) qui, sur les faces intérieures orientées l'une vers l'autre, comporte au moins un galet de guidage, **en ce que** dans une ou dans les deux zones d'extrémité de chaque rail profilé (30, 31), sur les faces orientées l'une vers l'autre, sont positionnés des boulons, sur chacun desquels est monté librement rotatif un galet de guidage (42) pour le guidage de l'élément coulissant (29), **en ce que** chaque élément de toit coulissant (16) est télescopique et comporte au moins deux éléments de toit aptes à coulisser par rapport à l'élément de toit fixe (12), et **en ce qu'**un premier élément coulissant (29), apte à coulisser exclusivement par rapport à l'élément de toit fixe (12), comporte une traverse (34), qui est agencée dans la zone arrière, par référence au sens de déploiement, et qui comporte au moins un galet de guidage (35) au niveau de chaque extrémité.

2. Véhicule-magasin (10), comportant un élément de toit fixe (12), contre lequel, au moins sur un côté longitudinal, une ou plusieurs parois latérales (13, 14) sont montées pivotantes, comportant au moins un panneau de rive du toit et dans lequel, dans la position de vente du véhicule-magasin, une surface de toit globale peut être formée au moins à partir de la surface de l'élément de toit fixe (12), de la paroi latérale pivotante ou des parois latérales pivotantes (13, 14) et du panneau de rive du toit ou des panneaux de rive du toit (17), au moins un élément coulissant (29) étant associé à l'élément de toit fixe (12), ledit élément de toit fixe (12) formant un guidage pour chaque élément coulissant (29), de telle sorte que chaque élément coulissant (29) peut coulisser dans la direction des bords longitudinaux de l'élément de toit fixe (12), et chaque élément coulissant (29) étant formé par un élément de toit coulissant (16) et au moins une paroi latérale et/ou un panneau de rive du toit (17) monté pivotant contre celle-ci, **caractérisé en ce que** dans les zones d'angle de l'élément de toit fixe (12), des profilés de guidage (22, 23) sont fixés sur la face intérieure et orientés dans la direction longitudinale, dans lesquels est guidé un profilé de support (24), réalisé sous la forme d'une partie de l'élément coulissant, **en ce que** le profilé de support (24) est réalisé en U, et **en ce que** les branches parallèles sont guidées à l'intérieur des profilés de guidage (22, 23), ou **en ce que** dans la zone centrale de l'élément de toit fixe (12) est fixé, sur la face intérieure, un profilé de guidage (27) orienté dans la direction longitudinale, dans lequel est guidé de manière à coulisser un profilé de support (24), réalisé sous la forme d'une partie de l'élément coulissant, lequel est formé par une traverse et un longeron (28) logé de manière à coulisser dans le profilé de guidage (27).

3. Véhicule-magasin selon la revendication 1 ou 2, **caractérisé en ce que** chaque élément coulissant (29) est apte à être déplacé progressivement.

4. Véhicule-magasin selon la revendication 1 ou 2, **caractérisé en ce que** la surface de toit totale peut être formée sans montant.

5. Véhicule-magasin selon la revendication 1 ou 2, **caractérisé en ce que** chaque élément de toit coulissant (16) est apte à être déplacé dans un plan adjacent à l'élément de toit fixe (12).

6. Véhicule-magasin selon la revendication 1 ou 2, **caractérisé en ce que** chaque élément coulissant (29) est ajusté à la largeur de l'élément de toit fixe (12).

7. Véhicule-magasin selon la revendication 1 ou 2, **caractérisé en ce que** chaque élément de toit coulissant (16) est décalé vers l'intérieur par rapport à l'élément de toit fixe (12), et **en ce que** des éléments de guidage (36, 37, 40, 41, 42) sont disposés dans l'espace intermédiaire.

8. Véhicule-magasin selon la revendication 1 ou 2, **caractérisé en ce que** deux éléments de toit coulissants (16) sont associés à l'élément de toit fixe (12).

9. Véhicule-magasin selon la revendication 8, **caractérisé en ce que** la longueur de chaque élément coulissant (16) correspond ou correspond à peu près à la moitié de la longueur ou sensiblement à la moitié de la longueur de l'élément de toit fixe (12).

10. Véhicule-magasin selon la revendication 8, **caractérisé en ce que** les éléments de toit coulissants (16), associés à la paroi arrière et à la paroi frontale, peuvent être déplacés dans des sens opposés.

11. Véhicule-magasin selon la revendication 2, **caractérisé en ce que** l'élément de toit fixe (12) est muni, sur chacun des côtés longitudinaux, d'un rail profilé (30, 31) qui, sur les faces intérieures orientées l'une vers l'autre, comporte au moins un galet de guidage.

12. Véhicule-magasin selon la revendication 1, **caractérisé en ce que** sur la traverse (34), dans les zones d'extrémité, sont fixés deux rails de guidage (36, 37), qui sont orientés parallèlement aux rails profilés (32, 33) de l'élément de toit fixe (12) et qui sont réalisés sous forme d'éléments de support pour un élément de toit coulissant, qui est apte à coulisser exclusivement par rapport à l'élément de toit fixe (12).

13. Véhicule-magasin selon la revendication 12, **caractérisé en ce que** des galets de roulement (40, 41) sont montés librement rotatifs sur un côté ou sur les deux côtés des rails de guidage (36, 37).

14. Véhicule-magasin selon la revendication 13, **caractérisé en ce que** les galets de roulement (40, 41) sont agencés par paires dans la zone avant et la zone centrale des rails de guidage (36, 37).

15. Véhicule-magasin selon la revendication 12, **caractérisé en ce que** les rails de guidage (36, 37) constituent un guidage pour les barres profilées (38, 39), qui entourent les rails de guidage (36, 37) et qui font partie d'un deuxième élément de toit, apte à coulisser par rapport à l'élément de toit fixe (12) et au premier élément de toit coulissant (16).

16. Véhicule-magasin selon la revendication 15, **caractérisé en ce que** les barres profilées (38, 39) ont des sections fermées.

17. Véhicule-magasin selon la revendication 12, **caractérisé en ce que** la branche, orientée vers l'élément de toit fixe (12), de chaque barre profilée comporte respectivement une rainure longitudinale (43, 45) sur la face intérieure et la face extérieure, et **en ce que** les galets de roulement (40) du rail de guidage (36 ou 37) associé s'engagent dans la rainure longitudinale (43) sur la face intérieure, et **en ce que** les galets de guidage (42), agencés sur élément de toit fixe, s'engagent dans la rainure longitudinale (45) sur la face extérieure.

18. Véhicule-magasin selon la revendication 17, **caractérisé en ce que** la rainure longitudinale (43) sur la face intérieure est décalée en hauteur par rapport à la rainure longitudinale (45) sur la face extérieure.

19. Véhicule-magasin selon la revendication 18, **caractérisé en ce que** la rainure longitudinale (43) sur la face intérieure, par rapport à la rainure longitudinale (45) sur la face extérieure, est décalée vers le bas par rapport à l'élément de toit fixe (12) ou au rail profilé (30) fixe.

20. Véhicule-magasin selon la revendication 1, **caractérisé en ce que** la branche en face, détournée du rail profilé (30) de l'élément de toit fixe (12), comporte sur la face intérieure au moins une rainure longitudinale (44), dans laquelle s'engagent les galets de roulement (40) disposés sur le rail de guidage (36, 37).

21. Véhicule-magasin selon la revendication 20, **caractérisé en ce que** la branche comporte, sur la face intérieure, deux rainures longitudinales disposées l'une au-dessus de l'autre, et **en ce que** des galets de roulement (40) s'engagent dans au moins une rainure longitudinale.

22. Véhicule-magasin selon la revendication 1 ou 2, **caractérisé en ce que** chaque élément de toit coulissant (16) est décalé vers l'extérieur par rapport à l'élément de toit fixe (12), et **en ce que** des éléments de guidage (20, 21, 24, 25, 26) pour l'élément de toit coulissant (16) respectif sont agencés dans l'espace intermédiaire.

23. Véhicule-magasin selon une ou plusieurs des revendications précédentes, **caractérisé en ce que** l'élément de toit fixe (12) et chaque élément de toit coulissant (16) sont réalisés avec une section en forme de U renversé, les hauteurs des branches extérieures parallèles étant nettement inférieures à la largeur de l'élément de toit fixe (12) ou de l'élément de toit coulissant (16).

24. Véhicule-magasin selon la revendication 23, **caractérisé en ce que** les branches parallèles de chaque élément de toit coulissant (16) sont situées à distance des bords longitudinaux de l'élément de toit fixe (12), et **en ce que** les éléments de guidage (20, 21, 25, 26) sont agencés dans l'espace formé par cette distance.

25. Véhicule-magasin selon la revendication 1 ou 2, qui est réalisé sous la forme d'un véhicule automobile, **caractérisé en ce qu'**un élément de toit coulissant (16) est associé à l'élément de toit fixe (12), et **en ce que** la longueur de l'élément de toit coulissant (16) correspond ou correspond à peu près à la moitié de la longueur de la structure carrossée.

26. Véhicule-magasin selon une ou plusieurs des revendications précédentes, **caractérisé en ce que** le véhicule-magasin (10) comporte au moins un hayon (52) transversal sur le côté arrière, lequel est apte à pivoter autour d'un axe horizontal situé dans la zone supérieure.

27. Véhicule-magasin selon la revendication 26, **caractérisé en ce que** le hayon (52) est formé de plusieurs parties, de préférence deux parties (52a et 52b), et **en ce que** les parties du hayon sont assemblées de manière articulée entre elles par des charnières ou une bande formant charnière (53).

28. Véhicule-magasin selon la revendication 27, **caractérisé en ce que** les parties du hayon sont réalisées avec des dimensions identiques et sont configurées de manière identique.

29. Véhicule-magasin selon la revendication 27, **caractérisé en ce que** de préférence sur l'élément coulissant (29), dans la zone supérieure, est monté de manière articulée un système d'entraînement linéaire, agissant comme auxiliaire de levage, de préférence une suspension pneumatique, dont l'organe mené est articulé sur le bord supérieur, par référence à la position de fermeture du hayon (52), de la partie supérieure du hayon (52).

30. Véhicule-magasin selon une ou plusieurs des revendications précédentes, **caractérisé en ce que** sur la face intérieure de l'élément de toit fixe (12) sont agencés un ou plusieurs luminaires, qui sont montés de préférence sur le profilé de guidage (27) central ou sont intégrés dans ledit profilé de guidage (27).

31. Véhicule-magasin selon une ou plusieurs des revendications précédentes, **caractérisé en ce qu'**à chaque élément coulissant (29) est associé un mécanisme de réglage.

32. Véhicule-magasin selon la revendication 31, **caractérisé en ce que** le mécanisme de réglage est réalisé sous la forme d'un système d'entraînement linéaire à moteur électrique ou sous la forme d'une unité à piston et cylindre actionnée par voie pneumatique.

33. Véhicule-magasin selon la revendication 32, **caractérisé en ce qu'**au moins sur un côté de l'élément de toit fixe (12) et au moins sur un côté de chaque élément de toit coulissant (16), des parois latérales (13, 14) pivotantes et un panneau de rive du toit (17) sont montés de manière articulée autour d'axes horizontaux (15,18).

34. Véhicule-magasin selon la revendication 33, **caractérisé en ce qu'**au moins sur les bords longitudinaux libres des parois latérales (13, 14) pivotantes et de chaque panneau de rive du toit (17) sont fixés, sur la face intérieure, des rails profilés destinés à maintenir une bâche.

35. Véhicule-magasin selon la revendication 34, **caractérisé en ce que** sur les bords extérieurs, orientés transversalement à la direction de coulissement des éléments coulissants (29), sont fixés des rails profilés destinés à recevoir des bâches.

36. Véhicule-magasin selon la revendication 1 ou 2, **caractérisé en ce qu'**une porte formant la paroi arrière et, le cas échéant, la paroi avant (19) est montée de manière pivotante sur les panneaux de rive du toit (17) pivotants de chaque élément coulissant (29), l'axe de pivotement étant un axe vertical et l'angle de pivotement étant de l'ordre de 270°.
